# EUROPÄISCHE PATENTSCHRIFT

(11) **EP 3 325 398 B1**
(45) Veröffentlichungstag und Bekanntmachung des Hinweises auf die Patenterteilung: **18.09.2019**
(21) Anmeldenummer: 16741320.2
(22) Anmeldetag: 21.07.2016
(51) Int. Cl.: B66D 1/54, B66D 1/74, B64D 1/22, B26D 5/08

(54) **SEILSCHNEIDEINHEIT FÜR EINE SEILWINDE, SEILSCHNEIDSYSTEM FÜR EINE SEILWINDE UND VERFAHREN ZUM BETREIBEN EINER SEILSCHNEIDEINHEIT FÜR EINE SEILWINDE**
CABLE-CUTTING UNIT FOR A CABLE WINCH, CABLE-CUTTING SYSTEM FOR A CABLE WINCH AND METHOD FOR OPERATING A CABLE-CUTTING UNIT FOR A CABLE WINCH
UNITÉ DE COUPE DE CÂBLE POUR UN TREUIL, SYSTÈME DE COUPE DE CÂBLE POUR UN TREUIL ET PROCÉDÉ POUR FAIRE FONCTIONNER UNE UNITÉ DE COUPE DE CÂBLE DESTINÉE À UN TREUIL

(30) Priorität: 21.07.2015 DE 102015009278
(43) Veröffentlichungstag der Anmeldung: 30.05.2018
(73) Patentinhaber: JENOPTIK Advanced Systems GmbH, 22880 Wedel (DE)
(72) Erfinder: FRIEDERICHS, Ralf, 22455 Hamburg (DE); SCHMIDT, Joachim, 25436 Tornesch (DE); THRON, Kai, 25421 Pinneberg (DE)
(74) Vertreter: Waldauf, Alexander
(86) Internationale Anmeldenummer: PCT/EP2016/067408
(87) Internationale Veröffentlichungsnummer: WO 2017/013205

(56) Entgegenhaltungen:
- FR-A1- 2 205 470
- GB-A- 1 289 939
- US-A- 3 074 320
- US-A- 3 240 474
- US-A- 3 290 013

## Beschreibung

### Stand der Technik

Die vorliegende Erfindung bezieht sich auf eine Seilschneideinheit für eine Seilwinde, ein Seilschneidsystem für eine Seilwinde sowie ein Verfahren zum Betreiben einer Seilschneideinheit für eine Seilwinde.

In Rettungshubschraubern werden Seilwinden, sogenannte Rettungswinden zur Bergung von in Not geratenen Personen eingesetzt. Bei dem Herablassen eines am Seil befindlichen Hakens der Rettungswinde von einem Hubschrauber kann es zu Situationen kommen, bei denen sich der Haken oder das Seil in am Boden befindlichen Gegenständen verfängt. Dies bedeutet eine Gefahr für Hubschrauber und Besatzung. Um dieser Situation entgegenzuwirken, kann eine Rettungswinde mit einer Seilschneidvorrichtung ausgestattet werden. Eine solche Seilschneidvorrichtung weist beispielsweise ein Messer auf, das zum Kappen des Seils per Treibladung ausgelöst wird.

Die GB 1 289 939 A, die US 3 290 013 A, die US 3 240 474 A und die US 3074 320 A offenbaren allesamt eine Seilschneideinheit für eine Seilwinde, wobei die Seilschneideinheit zumindest eine Seilschneidvorrichtung zum Kappen eines die Seilschneideinheit durchlaufenden Seils und einen Schlitten aufweist. Ferner ist ein Gehäuse mit einem Seilkanal zum Führen des die Seilschneideinheit durchlaufenden Seils vorgesehen, wobei die Seilschneidvorrichtung an dem Schlitten angeordnet oder anordenbar ist und der Schlitten quer zu dem Seilkanal zwischen einer ersten Position und einer zweiten Position verfahrbar an dem Gehäuse angeordnet oder anordenbar ist.

### Offenbarung der Erfindung

Vor diesem Hintergrund werden mit der vorliegenden Erfindung eine Seilschneideinheit für eine Seilwinde, ein Seilschneidsystem für eine Seilwinde sowie ein Verfahren zum Betreiben einer Seilschneideinheit für eine Seilwinde gemäß den Hauptansprüchen vorgestellt. Vorteilhafte Ausgestaltungen ergeben sich aus den jeweiligen Unteransprüchen und der nachfolgenden Beschreibung.

Eine Anordnung einer Seilschneidvorrichtung für eine Seilwinde an einem mechanisch verfahrbaren Schlitten schafft die Möglichkeit, den Schlitten mit der Vorrichtung nach einem Auslösen der Seilschneidvorrichtung seitlich zu verfahren, sodass das Seil ungehindert neben der Seilschneidvorrichtung herausgefahren werden kann.

Dieser hier vorgeschlagene Ansatz kann nach einem Kappen des Seils eine Blockade des Seils aufgrund der ausgelösten Messerschneide verhindern und ein Abspulen des Seils zur Montage eines Ersatzhakens ermöglichen. Damit kann vorteilhafterweise während des Fluges ein Ersatzhaken an dem verbleibenden Seil befestigt werden, der Betrieb der Winde wieder aufgenommen und eine begonnene Rettungsmission erfolgreich abgeschlossen werden.

Sofern der Hubschrauber nicht über eine redundante Winde verfügt, muss die Mission abgebrochen werden und das komplette Seil vom Wartungspersonal nach Rückkehr des Hubschraubers am Boden ausgetauscht werden. Erst dann kann nach erneutem Start die Rettungsmission beendet oder eine neue begonnen werden.

Mit dem hier vorgeschlagenen Konzept kann auf eine kostenintensive und schwere zweite Rettungswinde im Hubschrauber verzichtet werden. Insbesondere kann dem Umstand Abhilfe geschaffen werden, dass wertvolle Zeit verloren wird, indem eine Rettungsmission abgebrochen und das komplette Seil nach Rückkehr des Hubschraubers vom Wartungspersonal am Boden ausgetauscht werden muss, um nach erneutem Start die Rettungsmission zu beenden oder eine neue zu beginnen.

Eine Seilschneideinheit für eine Seilwinde weist die folgenden Merkmale auf:
zumindest eine Seilschneidvorrichtung zum Kappen eines die Seilschneideinheit durchlaufenden Seils;
einen Schlitten; und
ein Gehäuse mit einem Seilkanal zum Führen des die Seilschneideinheit durchlaufenden Seils, wobei die Seilschneidvorrichtung an dem Schlitten angeordnet oder anordenbar ist und der Schlitten quer zu dem Seilkanal zwischen einer ersten Position und einer zweiten Position verfahrbar an dem Gehäuse angeordnet oder anordenbar ist.

Bei der Seilwinde kann es sich um eine Rettungswinde handeln, die beispielsweise an einem Helikopter zur Rettung von in Not geratenen Personen installiert sein kann. Die Seilwinde kann ein Seil umfassen, das mit einem Haken ausgestattet ab- und wieder aufgerollt werden kann. Bei der Seilschneidvorrichtung kann es sich um eine Anordnung handeln, die ausgebildet ist, um das Seil zu kappen, beispielsweise als Sicherheitsmaßnahme, wenn das Seil oder der Haken sich verfangen hat.

Erfindungsgemäß sind in der ersten Position des Schlittens die Seilschneidvorrichtung bezogen auf eine Längserstreckung des Seilkanals dem Seilkanal gegenüberliegend angeordnet und in der zweiten Position des Schlittens die Seilschneidvorrichtung bezogen auf die Längserstreckung des Seilkanals seitlich versetzt gegenüber dem Seilkanal angeordnet. So kann das Seil vorteilhafterweise für ein weiteres Abrollen nach dem Kappen freigegeben werden.

Gemäß einer weiteren Ausführungsform kann die Seilschneidvorrichtung ein Messer aufweisen. Das Messer kann ausgebildet sein, um ansprechend auf eine Aktivierung aus einem Innenbereich der Seilschneidvorrichtung seitlich in den Seilkanal einzudringen, um das Seil zu kappen. Auf diese Weise kann das Seil schnell und effizient gekappt werden.

Beispielsweise kann die Seilschneideinheit eine Treibladung aufweisen, die in der Seilschneidvorrichtung angeordnet oder anordenbar und ausgebildet sein kann, um das Messer zu aktivieren. Mit der Treibladung kann das Messer mit möglichst geringem Zeitverzug aktiviert werden.

Gemäß einer Ausführungsform kann sich der Seilkanal zwischen einer Bodenwand und einer Deckelwand des Gehäuses erstrecken. Dabei kann eine erste Ausnehmung in der Deckelwand ein erstes Ende des Seilkanals bilden und eine der ersten Ausnehmung gegenüberliegende zweite Ausnehmung in der Bodenwand ein zweites Ende des Kanals bilden.

Beispielsweise können die erste Ausnehmung und die zweite Ausnehmung jeweils eine zu einer Seitenkante der Bodenwand und einer Seitenkante der Deckelwand offene U-Form aufweisen. Mit dieser Ausführungsform kann das Seil ohne weiteres zum Führen in der Seilschneideinheit aufgenommen werden.

Der Schlitten kann ausgebildet sein, um zwischen der ersten Position und der zweiten Position verfahrbar an einem ersten Ende an der Deckelwand gelagert zu sein und an einem dem ersten Ende gegenüberliegenden zweiten Ende an der Bodenwand gelagert zu sein. Gemäß dieser Ausführungsform kann die Seilschneideinheit besonders funktional und mit geringem Materialaufwand realisiert werden.

Insbesondere kann der Schlitten eine den Seilkanal umgreifende U-Form aufweisen. Die Seilschneidvorrichtung kann an einer Außenseite einer einen Schenkel der U-Form repräsentierenden Wand des Schlittens angeordnet sein. In dieser Ausführungsform des Schlittens kann die Seilschneidvorrichtung in der ersten Position des Schlittens geeignet dem Seilkanal gegenüberliegend angeordnet werden und gleichzeitig die Verfahrfunktion des Schlittens optimal gewährleistet werden.

Das Gehäuse kann ferner eine die Bodenwand und die Deckelwand verbindende Rückwand aufweisen. Die Rückwand kann an einer zu einem Inneren des Gehäuses gerichteten Innenwand zumindest eine sich quer zu dem Seilkanal erstreckende Nut zum Führen einer einen weiteren Schenkel der U-Form repräsentierenden weiteren Wand des Schlittens zwischen der ersten Position und der zweiten Position aufweisen. Mit dieser Ausführungsform des Gehäuses kann der Schlitten sicher zwischen der ersten und der zweiten Position verschoben werden.

Gemäß einer besonderen Ausführungsform kann die Seilschneideinheit eine weitere Seilschneidvorrichtung aufweisen. Die weitere Seilschneidvorrichtung kann benachbart zu der Seilschneidvorrichtung dem Seilkanal bezogen auf eine Längserstreckung des Seilkanals gegenüberliegend an dem Schlitten angeordnet oder anordenbar sein. So wird vorteilhafterweise eine redundante Möglichkeit zum Kappen des Seils geschaffen.

Ferner kann das Gehäuse eine zwischen der Bodenwand und der Deckelwand angeordnete und parallel zu der Bodenwand und der Deckelwand verlaufende Zwischenwand mit einer dritten Ausnehmung aufweisen. Entsprechend kann der Schlitten eine sich quer zu dem Seilkanal erstreckende Öffnung für eine Ineingriffnahme durch die Zwischenwand aufweisen. Dabei kann die Seilschneidvorrichtung zwischen der Deckelwand und der Zwischenwand an dem Schlitten angeordnet oder anordenbar sein und die weitere Seilschneidvorrichtung zwischen der Zwischenwand und der Bodenwand an dem Schlitten angeordnet oder anordenbar sein. Mit dieser Ausführungsform kann ein Verkanten des Schlittens in der Schiebebewegung zwischen der ersten und der zweiten Position vermieden werden.

Ein Seilschneidsystem für eine Seilwinde weist die folgenden Merkmale auf:
eine Seilschneideinheit gemäß einer der im Vorangegangenen angeführten Ausführungsformen; und
eine Seilabrolleinrichtung, die mit der Seilschneideinheit mechanisch und/oder elektrisch gekoppelt oder koppelbar ist und ausgebildet ist, um ansprechend auf ein Verfahren des Schlittens der Seilschneideinheit aus der ersten Position in die zweite Position ein Abrollen des Seils einzuleiten.

Die Seilabrolleinrichtung kann ein Steuergerät, einen Antrieb zum Abrollen des Seils und gegebenenfalls einen weiteren Antrieb zum Verfahren des Schlittens zwischen der ersten und der zweiten Position aufweisen. Das Steuergerät kann ausgebildet sein, um nach einem Kappen des Seils ein Abrollsignal zum Abrollen einer Restlänge des Seils an den Antrieb zum Abrollen des Seils bereitzustellen. Bei einem Verzicht auf den weiteren Antrieb kann der Sattel auch manuell zwischen der ersten und der zweiten Position bewegt werden.

Ein Verfahren zum Betreiben einer Seilschneideinheit für eine Seilwinde, wobei die Seilschneideinheit zumindest eine Seilschneidvorrichtung zum Schneiden eines die Seilschneideinheit durchlaufenden Seils, einen Schlitten und ein Gehäuse mit einem Seilkanal zum Führen des die Seilschneideinheit durchlaufenden Seils aufweist, wobei die Seilschneidvorrichtung an dem Schlitten angeordnet oder anordenbar ist und der Schlitten an dem Gehäuse angeordnet oder anordenbar ist, weist den folgenden Schritt auf:
Verfahren des Schlittens quer zu dem Seilkanal zwischen einer ersten Position und einer zweiten Position, wobei in der ersten Position des Schlittens die Seilschneidvorrichtung bezogen auf eine Längsstreckung des Seilkanals dem Seilkanal gegenüberliegend angeordnet ist und in der zweiten Position des Schlittens die Seilschneidvorrichtung bezogen auf die Längsstreckung des Seilkanals seitlich versetzt gegenüber dem Seilkanal angeordnet ist.

Unter einem Verfahren des Schlittens kann allgemein ein Bewegen des Schlittens verstanden werden.

Auch durch diese Ausführungsvariante der Erfindung in Form eines Verfahrens kann die der Erfindung zugrunde liegende Aufgabe schnell und effizient gelöst werden.

Gemäß einer Ausführungsform kann das Verfahren einen Schritt des Bereitstellens eines Aktivierungssignals an die Seilschneideinheit aufweisen, um die Seilschneidvorrichtung zu aktivieren, um das Seil zu kappen. Der Schritt des Bereitstellens kann vor dem Schritt des Verfahrens ausgeführt werden. Mit dieser Ausführungsform kann das Kappen des Seils entfernt ausgelöst und zeitlich optimal gesteuert werden.

Die Erfindung wird nachstehend anhand der beigefügten Zeichnungen beispielhaft näher erläutert. Es zeigen:
Fig. 1 eine Darstellung einer Seilschneideinheit für eine Seilwinde gemäß einem Ausführungsbeispiel der vorliegenden Erfindung;
Figuren 2 bis 9 Darstellungen zur Erläuterung eines Funktionsablaufs einer Seilschneideinheit für eine Seilwinde gemäß Ausführungsbeispielen der vorliegenden Erfindung;
Fig. 10 eine schematische Darstellung eines Seilschneidsystems für eine Seilwinde gemäß einem Ausführungsbeispiel der vorliegenden Erfindung; und
Fig. 11 ein Ablaufdiagramm eines Verfahrens zum Betreiben einer Seilschneideinheit für eine Seilwinde gemäß einem Ausführungsbeispiel der vorliegenden Erfindung.

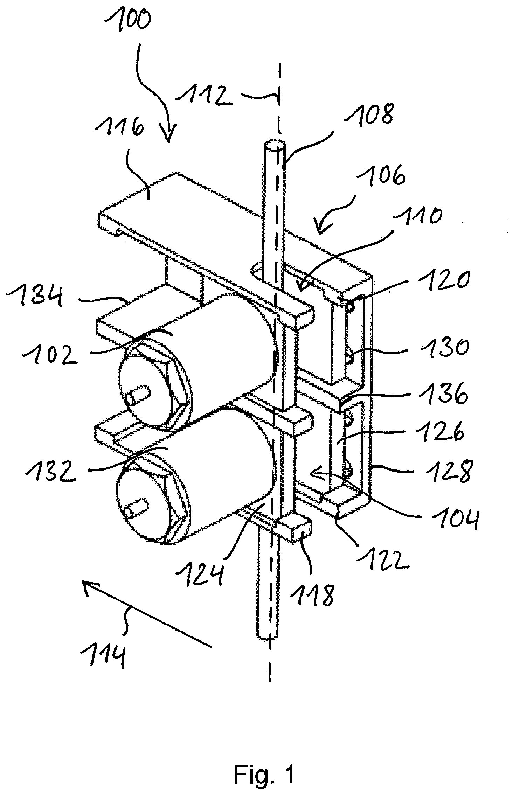

Fig. 1 zeigt eine perspektivische Darstellung einer Seilschneideinheit 100 für eine Seilwinde gemäß einem Ausführungsbeispiel der vorliegenden Erfindung. Die Seilschneideinheit 100 kann beispielsweise in Kombination mit einer Seilwinde bzw. Rettungswinde in einem Rettungshubschrauber zum Einsatz kommen.

Die Seilschneideinheit 100 umfasst eine Seilschneidvorrichtung 102, einen Schlitten 104 und ein Gehäuse 106. Mittels des Gehäuses 106 kann die Seilschneideinheit 100 am Rettungshubschrauber bzw. an einer am Rettungshubschrauber installierten Rettungswinde befestigt werden.

Die Seilschneidvorrichtung 102 ist ausgebildet, um ein die Seilschneideinheit 100 durchlaufendes Seil 108 zu kappen, beispielsweise, wenn sich das Seil 108 oder ein an dem Seil 108 befestigter Haken am Boden verfangen hat. Die Seilschneidvorrichtung 102 ist an dem Schlitten 104 angeordnet, der wiederum zwischen einer ersten Position und einer zweiten Position verschiebbar bzw. verfahrbar an dem Gehäuse 106 angeordnet ist. Zum Führen des Seils 108 durch die Seilschneideinheit 100 bildet das Gehäuse 106 einen Seilkanal 110 aus. Das Seil 108 wird entlang einer mittels einer Strichlinie in der Darstellung gekennzeichneten Längserstreckung 112 des Seilkanals 110 von oben nach unten durch die Seilschneideinheit 100 geführt.

In der Darstellung in Fig. 1 ist der Schlitten 104 in einer ersten Position gezeigt. In dieser ersten Position ist die an dem Schlitten 104 angeordnete Seilschneidvorrichtung 102 bezogen auf die Längserstreckung 112 des Seilkanals 110 dem Seilkanal 110 und dem im Seilkanal 110 geführten Seil 108 seitlich gegenüberliegend angeordnet.

Die in Fig. 1 gezeigte beispielhafte Seilschneidvorrichtung 102 weist eine Zylinderform auf. In einem Inneren der Seilschneidvorrichtung 102 sind ein Messer zum Kappen des Seils 108 und eine Treibladung zum Aktivieren des Messers angeordnet. Eine an den Schlitten 104 angrenzende Stirnseite der Seilschneidvorrichtung 102 weist eine Öffnung zum Durchlassen des aktivierten Messers in den Seilkanal 110 auf, um das Seil 108 mit einer Schneide des Messers zu erreichen und zu kappen. Wird in der in Fig. 1 gezeigten ersten Position des Schlittens 104 das Messer aktiviert, dringt es seitlich in den Seilkanal 110 ein und kappt das Seil 108.

Nach dem Kappen des Seils 108 kann zur weiteren Seilfreigabe der Schlitten 104 in einer quer zu dem Seilkanal 110 verlaufenden und in Fig. 1 mittels eines Pfeils gekennzeichneten Verfahrrichtung 114 aus der ersten Position in eine zweite Position verschoben werden. In der zweiten Position befindet sich die Seilschneidvorrichtung 102 bezogen auf die Längserstreckung 112 des Seilkanals 110 seitlich versetzt gegenüber dem Seilkanal 110 und dem im Seilkanal 110 geführten restlichen Seil 108.

Bei dem in Fig. 1 gezeigten Ausführungsbeispiel der Seilschneideinheit 100 wird das Gehäuse 106 nach oben von einer Deckelwand 116 und nach unten von einer Bodenwand 118 begrenzt. Die Deckelwand 116 und die Bodenwand 118 sind parallel zueinander angeordnet, gleich groß und weisen je eine längliche Rechteckform auf.

Der Seilkanal 110 erstreckt sich zwischen der Deckelwand 116 und der Bodenwand 118 des Gehäuses 106. Dabei bildet eine erste Ausnehmung 120 in der Deckelwand 116 ein erstes Ende des Seilkanals 110 und eine der ersten Ausnehmung 120 gegenüberliegende zweite Ausnehmung 122 in der Bodenwand 118 ein zweites Ende des Seilkanals 110.

Die Ausnehmungen 120, 122 weisen je eine längliche Form auf und erstrecken sich von kurzen Seitenkanten der Deckelwand 116 und der Bodenwand 118 in Richtung eines jeweiligen Mittelbereichs der Deckelwand 116 und der Bodenwand 118. Die Ausnehmungen 120, 122 weisen eine U-Form auf. Die Ausnehmungen 120, 122 ermöglichen ein seitliches Einführen des Seils 108 in den Seilkanal 110 der Seilschneideinheit 100 am offenen Ende der u-förmigen Ausnehmungen 120, 122. Die Ausnehmungen 120, 122 sind dabei groß bzw. lang genug, um zu gewährleisten, dass das im Seilkanal 110 geführte Seil 108 in der ersten Position des Schlittens 104 der Seilschneidvorrichtung 102 gegenüberliegt.

Der Schlitten 104 weist bei dem in Fig. 1 gezeigten Ausführungsbeispiel der Seilschneideinheit 100 eine den Seilkanal 110 umgreifende - quasi liegende - U-Form auf. Dabei ist eine Öffnung des u-förmigen Schlittens 104 in Richtung der die Ausnehmungen 120, 122 ausbildenden Seitenkanten der Deckelwand 116 und der Bodenwand 118 gerichtet, um das Aufnehmen des Seils 108 in den Seilkanal 110 zu gewährleisten.

Zum Verfahren des Schlittens 104 in der Verfahrrichtung 114 fassen eine erste lange Seite der Deckelwand 116 und eine erste lange Seite der Bodenwand 118 eine einen ersten Schenkel der U-Form des Schlittens 104 repräsentierende Wand 124 ein bzw. lagern die Wand 124 verfahrfähig. Entsprechend fassen eine zweite lange Seite der Deckelwand 116 und eine zweite lange Seite der Bodenwand 118 eine einen zweiten Schenkel der U-Form des Schlittens 104 repräsentierende weitere Wand 126 ein bzw. lagern die weitere Wand 126 verfahrfähig.

Eine Wand des Gehäuses 106, die die zweite lange Seite der Deckelwand 116 und die zweite lange Seite der Bodenwand 118 verbindet, bildet eine Rückwand 128 des Gehäuses 106. Im Verfahren des Schlittens 104 in der Verfahrrichtung 114 zwischen der ersten und der zweiten Position gleitet die weitere Wand 126 des Schlittens 104 entlang einer dem Schlitten 104 zugewandten Innenseite der Rückwand 128. Zum verkantungsfreien Führen des Schlittens 104 weist die Rückwand 128 an der Innenseite zumindest eine sich quer zu dem Seilkanal 110 erstreckende Nut 130 auf. Bei dem in Fig. 1 gezeigten Ausführungsbeispiel der Seilschneideinheit 100 weist die Innenseite der Rückwand 128 eine Mehrzahl von vier Nuten 130 auf.

Die Seilschneidvorrichtung 102 ist an einer Außenseite, also einer von dem Seilkanal 110 weg weisenden Seite der Wand 124 des Schlittens 104 angeordnet. Das in Fig. 1 gezeigte Ausführungsbeispiel der Seilschneideinheit 100 weist zusätzlich eine weitere Seilschneidvorrichtung 132 auf. Die weitere Seilschneidvorrichtung 132 ist identisch zu der Seilschneidvorrichtung 102 realisiert und fluchtend unterhalb der Seilschneidvorrichtung 102 benachbart zu der Seilschneidvorrichtung 102 an der Außenseite der Wand 124 des Schlittens 104 angeordnet. Die weitere Seilschneidvorrichtung 132 verfügt wie die Seilschneidvorrichtung 102 über ein Messer, das per Treibladung zum Kappen des Seils 108 aktiviert werden kann. Damit verfügt die in Fig. 1 gezeigte beispielhafte Seilschneideinheit 100 über eine redundante Möglichkeit zum Kappen des Seils 108.

Die in Fig. 1 gezeigte beispielhafte Seilschneideinheit 100 weist ferner eine Zwischenwand 134 auf. Die Zwischenwand 134 erstreckt sich quer zu der Rückwand 128 auf halber Höhe zwischen der Deckelwand 116 und der Bodenwand 118 und verläuft parallel zu der Deckelwand 116 und der Bodenwand 118. Die Zwischenwand 134 weist eine identisch zu den Ausnehmungen 120, 122 ausgeformte dritte Ausnehmung 136 zum Aufnehmen des Seils 108 in den Seilkanal 110 auf. Um die Verfahrbarkeit des Schlittens 104 zu gewährleisten bzw. zu unterstützen, weist der Schlitten 104 eine sich quer zu dem Seilkanal 110 erstreckende Öffnung für eine Ineingriffnahme durch die Zwischenwand 134 auf.

Bei der in Fig. 1 gezeigten Variante der Seilschneideinheit 100 ist die Seilschneidvorrichtung 102 zwischen der Deckelwand 116 und der Zwischenwand 134 an dem Schlitten 104 angeordnet und die redundante weitere Seilschneidvorrichtung 132 zwischen der Zwischenwand 134 und der Bodenwand 118 an dem Schlitten 104 angeordnet.

Zusammenfassend zeigt Fig. 1 eine Variante der hierin vorgestellten Seilschneideinheit 100 mit zwei Seilschneidvorrichtungen 102, 132 mit seitlicher Öffnung, die bezogen auf die Längserstreckung 112 des Seilkanals 110 hintereinander liegend auf dem Schlitten 104 montiert sind. Der Schlitten 104 ist in der Verfahrrichtung 114 seitlich verfahrbar. Nach dem Auslösen zumindest einer der Seilschneidvorrichtungen 102, 132 ist in der in Fig. 1 gezeigten ersten Position des Schlittens 104 die Spur des Seils 108 durch das heruntergelassene Messer blockiert. Mit dem Verfahren des Schlittens in die zweite Position wird das Messer seitlich von dem neuen Seilende weg bewegt. Das Seil 108 ist dann nicht mehr blockiert und kann von der Winde nach unten abgerollt bzw. abgespult werden.

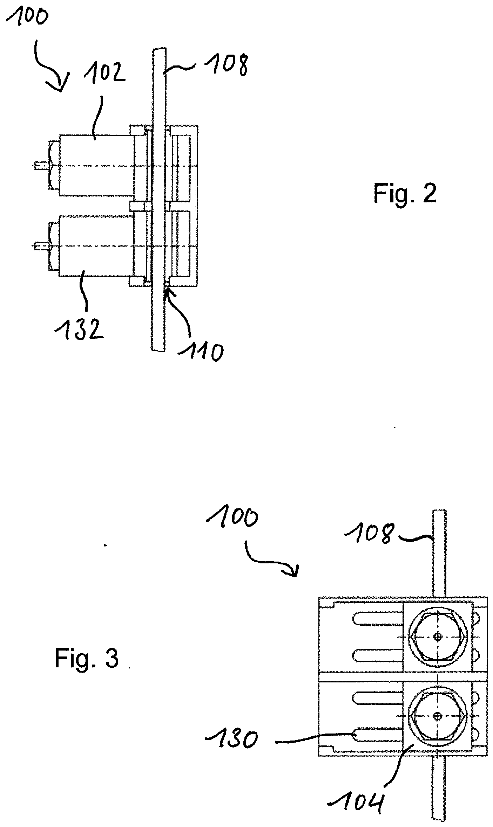

Die nachfolgenden Figuren 2 bis 9 zeigen Darstellungen zur Erläuterung eines Funktionsablaufs in einem beispielhaften Betrieb der in Fig. 1 vorgestellten Seilschneideinrichtung 100 für eine Seilwinde gemäß Ausführungsbeispielen der vorliegenden Erfindung. Die Figuren 2 bis 9 zeigen beispielhaft vier Stationen des Funktionsablaufs. An jeder Station ist die Seilschneideinrichtung 100 einmal im Querschnitt und einmal in der Draufsicht von vorn gezeigt. Konkret zeigen die Figuren 2, 4, 6 und 8 die Seilschneideinrichtung 100 im Querschnitt und die Figuren 3, 5, 7 und 9 die Seilschneideinrichtung 100 in der Draufsicht.

Figuren 2 und 3 zeigen eine Standardsituation der Seilschneideinrichtung 100. Das Seil 108 verläuft im Seilkanal 110 durch die Seilschneidvorrichtungen 102, 132. Die Messer der Seilschneidvorrichtungen 102, 132 sind nicht ausgelöst und befinden sich jeweils in einem Innenbereich der Gehäuse der Seilschneidvorrichtungen 102, 132. Der Schlitten 104 befindet sich in der auch in Fig. 1 gezeigten ersten Position, in der die an dem Schlitten angeordneten Seilschneidvorrichtungen 102, 132 dem Seil 108 genau gegenüberliegend positioniert sind.

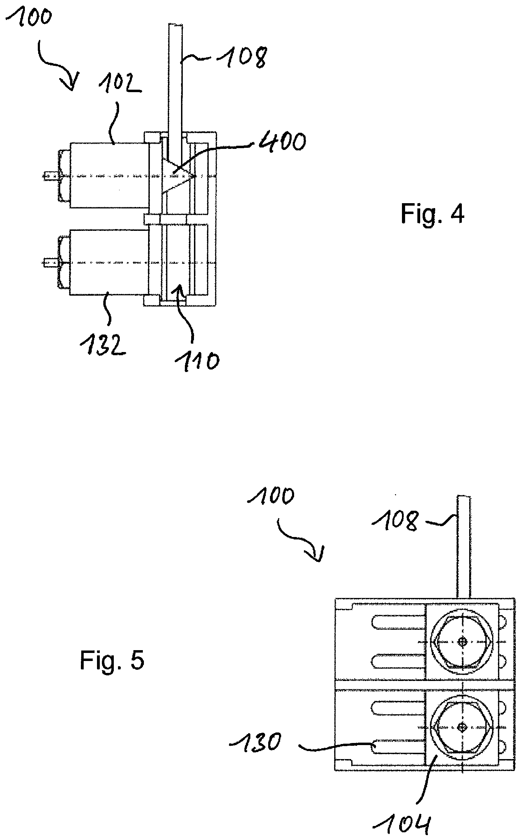

Figuren 4 und 5 zeigen einen Funktionszustand der Seilschneideinrichtung 100 zu einem Zeitpunkt im Funktionsablauf, nachdem die Seilschneidvorrichtung 102 ausgelöst hat. Angetrieben durch eine Zündung einer in der Seilschneidvorrichtung 102 angeordneten Treibladung wurde ein Messer 400 aus dem Inneren der Seilschneidvorrichtung 102 seitlich in den Seilkanal 110 getrieben und hat das Seil 108 gekappt. Ein unterhalb des Schnitts liegender Abschnitt des Seils 108 ist aus der Seilschneideinheit 100 heraus gefallen. Das heruntergefahrene Messer 400 bleibt im Seilkanal 110 stehen und blockiert eine Spur des restlichen Seils 108 in dem Seilkanal 110.

In der in den Figuren 4 und 5 dargestellten Station im Funktionsablauf ist das neue Seilende durch das herausgefahrene Messer 400 blockiert und kann von einem Bediener einer der Seilschneideinrichtung 100 zugeordneten Winde nicht erreicht werden. Ein Seilwechsel oder ein Eingreifen in den Seilverlauf durch den Bediener ist im Flug des die Winde aufweisenden Hubschraubers aufgrund der Lage der Winde und der Situation grundsätzlich nicht möglich.

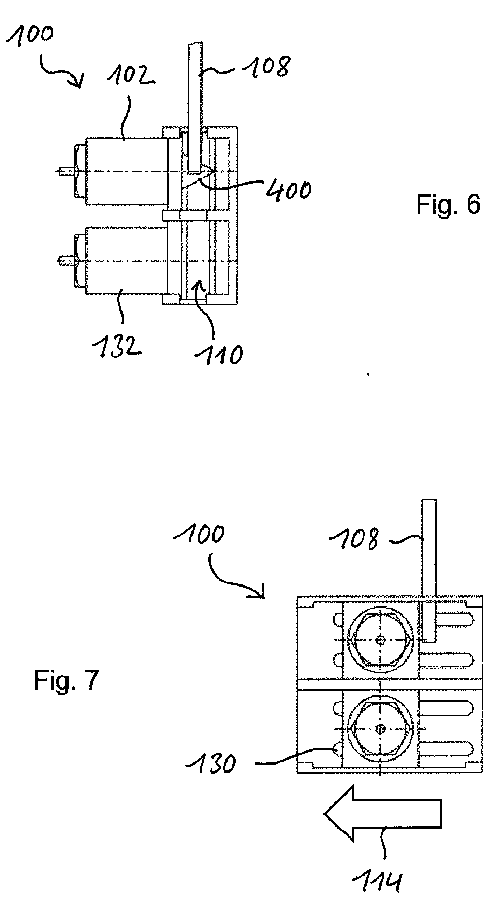

Die Lösung dieser Situation mittels des Einsatzes des hierin vorgestellten verfahrbaren Schlittens 104 ist in den Figuren 6 und 7 gezeigt. Hier ist der Schlitten 104 zu einem späteren Zeitpunkt im Funktionsablauf in einer zweiten Position gezeigt. Der Schlitten 104 wurde in der Verfahrrichtung 114 aus der ersten Position nach links in die zweite Position verfahren bzw. verschoben. Die Seilschneidvorrichtungen 102, 132 sind nun seitlich versetzt gegenüber dem Seilkanal 110 und dem im Seilkanal 110 geführten restlichen Seil 108 positioniert. In der zweiten Position des Schlittens 104 ist die Blockade der Seilspur durch das Messer 400 aufgehoben. Das Seil 108 verläuft nun neben den Seilschneidvorrichtungen 102, 132 und kann nach unten aus dem Seilkanal 110 herausgefahren werden.

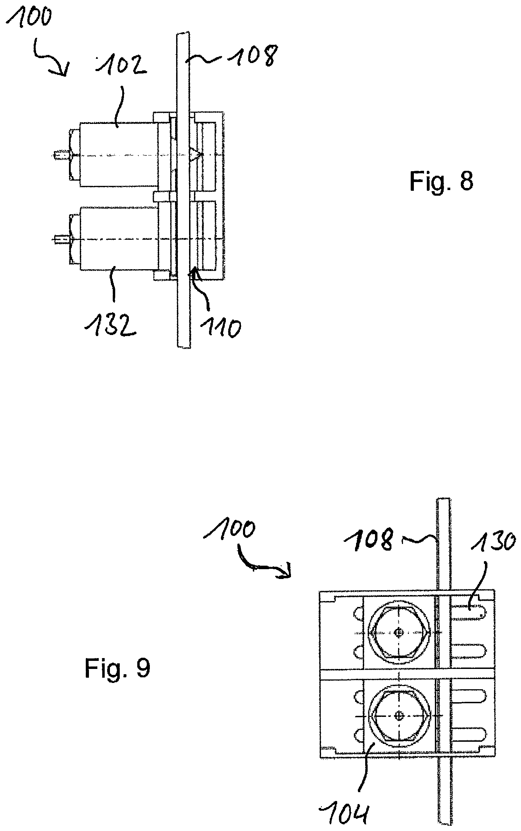

Die Figuren 8 und 9 zeigen das restliche Seil 108 im aus dem unteren Ende des Seilkanals 110 herausgefahrenen Zustand.

Gemäß einem Ausführungsbeispiel geschieht das Abspulen des Seils 108 automatisch, also ohne Einfluss des Operators bzw. Bedieners der zugeordneten Seilwinde. Das Seil 108 wird so weit abgelassen, dass das Seilende vom Operator problemlos gegriffen und ein Nothaken montiert werden kann.

Der Vorgang für die Freigabe und das Abspulen des Seiles 108 wird vom Operator oder alternativ vom Piloten des die Seilwinde aufweisenden Rettungshubschraubers ausgelöst.

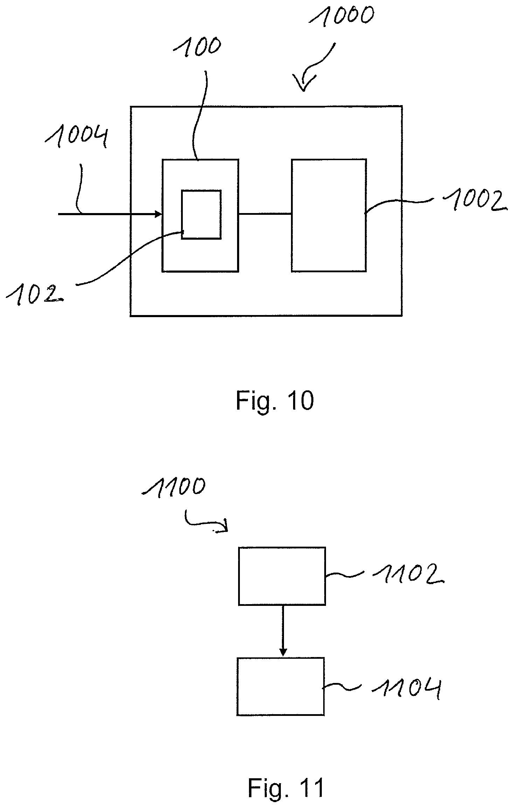

Fig. 10 zeigt eine schematische Darstellung eines Seilschneidsystems 1000 für eine Seilwinde gemäß einem Ausführungsbeispiel der vorliegenden Erfindung. Das Seilschneidsystem 1000 umfasst ein Ausführungsbeispiel der Seilschneideinheit 100 mit zumindest der Seilschneidvorrichtung 102 und eine Seilabrolleinrichtung 1002. Die Seilschneideinheit 100 und die Seilabrolleinrichtung 1002 sind Teil einer Seilwinde und mechanisch und/oder elektrisch miteinander gekoppelt.

Die Seilschneidvorrichtung 102 ist ausgebildet, um ansprechend auf ein Aktivierungssignal 1004 ein Seil der Seilwinde zu kappen, beispielsweise durch Ausfahren eines Messers aus einem Gehäuse der Seilschneidvorrichtung 102.

Die Seilabrolleinrichtung 1002 ist ausgebildet, um ansprechend auf ein Verfahren eines Schlittens der Seilschneideinheit 100 aus einer ersten Position in eine zweite Position ein Abrollen des Seils einzuleiten.

Fig. 11 zeigt ein Ablaufdiagramm eines Ausführungsbeispiels eines Verfahrens 1100 zum Betreiben einer Seilschneideinheit für eine Seilwinde gemäß einem Ausführungsbeispiel der vorliegenden Erfindung. Das Verfahren 1100 kann zum Betreiben der in den Figuren 1 bis 10 gezeigten beispielhaften Seilschneideinheit ausgeführt werden.

In einem Schritt 1102 des Bereitstellens wird ein Aktivierungssignal an die Seilschneideinheit bereitgestellt, um eine Seilschneidvorrichtung der Seilschneideinheit zu aktivieren. Die Aktivierung der Seilschneidvorrichtung bewirkt, dass ein Messer aus der Seilschneidvorrichtung seitlich in einen Seilkanal der Seilschneideinheit getrieben wird und ein in dem Seilkanal geführtes Seil kappt.

In einem Schritt des Verfahrens 1104 wird ein die Seilschneidvorrichtung tragender Schlitten der Seilschneideinheit quer zu dem Seilkanal zwischen einer ersten Position und einer zweiten Position verfahren, um die Seilschneidvorrichtung versetzt gegenüber dem Seilkanal zu positionieren und damit eine Blockade des Seilkanals durch das aus der Seilschneidvorrichtung heruntergefahrene Messer aufzuheben.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Seilschneideinheit (100) für eine Seilwinde, wobei die Seilschneideinheit (100) die folgenden Merkmale aufweist:
zumindest eine Seilschneidvorrichtung (102) zum Kappen eines die Seilschneideinheit (100) durchlaufenden Seils (108);
einen Schlitten (104); und
ein Gehäuse (106) mit einem Seilkanal (110) zum Führen des die Seilschneideinheit (100) durchlaufenden Seils (108), wobei die Seilschneidvorrichtung (102) an dem Schlitten (104) angeordnet oder anordenbar ist und der Schlitten (104) quer zu dem Seilkanal (110) zwischen einer ersten Position und einer zweiten Position verfahrbar an dem Gehäuse (106) angeordnet oder anordenbar ist, wobei in der ersten Position des Schlittens (104) die Seilschneidvorrichtung (102) bezogen auf eine Längserstreckung (112) des Seilkanals (110) dem Seilkanal (110) gegenüberliegend angeordnet ist und in der zweiten Position des Schlittens (104) die Seilschneidvorrichtung (102) bezogen auf die Längserstreckung (112) des Seilkanals (110) seitlich versetzt gegenüber dem Seilkanal (110) angeordnet ist.

2. Seilschneideinheit (100) gemäß Anspruch 1, **dadurch gekennzeichnet, dass** die Seilschneidvorrichtung (102) ein Messer (400) aufweist, das ausgebildet ist, um ansprechend auf eine Aktivierung aus einem Innenbereich der Seilschneidvorrichtung (102) seitlich in den Seilkanal (110) einzudringen, um das Seil (108) zu kappen.

3. Seilschneideinheit (100) gemäß Anspruch 2, **gekennzeichnet durch** eine Treibladung, die in der Seilschneidvorrichtung (102) angeordnet oder anordenbar ist und ausgebildet ist, um das Messer (400) zu aktivieren.

4. Seilschneideinheit (100) gemäß einem der vorangegangenen Ansprüche, **dadurch gekennzeichnet, dass** sich der Seilkanal (110) zwischen einer Deckelwand (116) und einer Bodenwand (118) des Gehäuses (106) erstreckt, wobei eine erste Ausnehmung (120) in der Deckelwand (116) ein erstes Ende des Seilkanals (110) bildet und eine der ersten Ausnehmung (120) gegenüberliegende zweite Ausnehmung (122) in der Bodenwand (118) ein zweites Ende des Seilkanals (110) bildet.

5. Seilschneideinheit (100) gemäß Anspruch 4, **dadurch gekennzeichnet, dass** die erste Ausnehmung (120) und die zweite Ausnehmung (122) jeweils eine zu einer Seitenkante der Deckelwand (116) und einer Seitenkante der Bodenwand (118) U-Form aufweisen.

6. Seilschneideinheit (100) gemäß Anspruch 4 oder 5, **dadurch gekennzeichnet, dass** der Schlitten (104) ausgebildet ist, um zwischen der ersten Position und der zweiten Position verfahrbar mit einem ersten Ende des Schlittens (104) an der Deckelwand (116) gelagert zu sein und mit einem dem ersten Ende gegenüberliegenden zweiten Ende des Schlittens (104) an der Bodenwand (118) gelagert zu sein.

7. Seilschneideinheit (100) gemäß einem der vorangegangenen Ansprüche, **dadurch gekennzeichnet, dass** der Schlitten (104) eine den Seilkanal (110) umgreifende U-Form aufweist, wobei die Seilschneidvorrichtung (102) an einer Außenseite einer einen Schenkel der U-Form repräsentierenden Wand (124) des Schlittens (104) angeordnet oder anordenbar ist.

8. Seilschneideinheit (100) gemäß Anspruch 7, **dadurch gekennzeichnet, dass** das Gehäuse (106) eine die Bodenwand (118) und die Deckelwand (116) verbindende Rückwand (128) aufweist, die an einer zu einem Inneren des Gehäuses (106) gerichteten Innenseite zumindest eine sich quer zu dem Seilkanal (110) erstreckende Nut (130) zum Führen einer einen weiteren Schenkel der U-Form repräsentierenden weiteren Wand (126) des Schlittens (104) zwischen der ersten Position und der zweiten Position aufweist.

9. Seilschneideinheit (100) gemäß einem der vorangegangenen Ansprüche, **gekennzeichnet durch** eine weitere Seilschneidvorrichtung (132), die benachbart zu der Seilschneidvorrichtung (102) dem Seilkanal (110) bezogen auf eine Längserstreckung (112) des Seilkanals (110) gegenüberliegend an dem Schlitten (104) angeordnet oder anordenbar ist.

10. Seilschneideinheit (100) gemäß einem der Ansprüche 4 bis 9, **dadurch gekennzeichnet, dass** das Gehäuse (106) eine zwischen der Deckelwand (116) und der Bodenwand (118) angeordnete und parallel zu der Deckelwand (116) und der Bodenwand (118) verlaufende Zwischenwand (134) mit einer dritten Ausnehmung (136) aufweist, wobei der Schlitten (104) eine sich quer zu dem Seilkanal (110) erstreckende Öffnung für eine Ineingriffnahme durch die Zwischenwand (134) aufweist, und wobei die Seilschneidvorrichtung (102) zwischen der Deckelwand (116) und der Zwischenwand (134) an dem Schlitten (104) angeordnet oder anordenbar ist und die weitere Seilschneidvorrichtung (132) zwischen der Zwischenwand (134) und der Bodenwand (118) an dem Schlitten (104) angeordnet oder anordenbar ist.

11. Seilschneidsystem (1000) für eine Seilwinde, wobei das Seilschneidsystem (1000) die folgenden Merkmale aufweist:
eine Seilschneideinheit (100) gemäß einem der vorangegangenen Ansprüche; und
eine Seilabrolleinrichtung (1002), die mit der Seilschneideinheit (100) mechanisch und/oder elektrisch gekoppelt oder koppelbar ist und ausgebildet ist, um ansprechend auf ein Verfahren des Schlittens (104) der Seilschneideinheit (100) aus der ersten Position in die zweite Position ein Abrollen des Seils (108) einzuleiten.

12. Verfahren (1100) zum Betreiben einer Seilschneideinheit (100) für eine Seilwinde, wobei die Seilschneideinheit (100) zumindest eine Seilschneidvorrichtung (102) zum Schneiden eines die Seilschneideinheit (100) durchlaufenden Seils (108), einen Schlitten (104) und ein Gehäuse (106) mit einem Seilkanal (110) zum Führen des die Seilschneideinheit (100) durchlaufenden Seils (108) aufweist, wobei die Seilschneidvorrichtung (102) an dem Schlitten (104) angeordnet oder anordenbar ist und der Schlitten (104) an dem Gehäuse (106) angeordnet oder anordenbar ist, und wobei das Verfahren (1100) den folgenden Schritt aufweist:
Verfahren (1104) des Schlittens (104) quer zu dem Seilkanal (110) zwischen einer ersten Position und einer zweiten Position, wobei in der ersten Position des Schlittens (104) die Seilschneidvorrichtung (102) bezogen auf eine Längserstreckung (112) des Seilkanals (110) dem Seilkanal (110) gegenüberliegend angeordnet ist und in der zweiten Position des Schlittens (104) die Seilschneidvorrichtung (102) bezogen auf die Längserstreckung (112) des Seilkanals (110) seitlich versetzt gegenüber dem Seilkanal (110) angeordnet ist.

13. Verfahren (1100) gemäß Anspruch 12, **gekennzeichnet durch** einen Schritt des Bereitstellens (1102) eines Aktivierungssignals (1004) an die Seilschneideinheit (100), um die Seilschneidvorrichtung (102) zu aktivieren, um das Seil (108) zu kappen, wobei der Schritt des Bereitstellens (1102) vor dem Schritt des Verfahrens (1104) ausgeführt wird.

## Claims

1. Cable-cutting unit (100) for a cable winch, wherein the cable-cutting unit (100) has the following features:
at least one cable-cutting device (102) for severing a cable (108) running through the cable-cutting unit (100) ;
a slide (104); and
a housing (106) having a cable duct (110) for guiding the cable (108) running through the cable-cutting unit (100), wherein the cable-cutting device (102) is disposed or disposable on the slide (104) and the slide (104) is disposed or disposable on the housing (106) so as to be displaceable transversely to the cable duct (110) between a first position and a second position, wherein in the first position of the slide (104) the cable-cutting device (102) in relation to a longitudinal extent (112) of the cable duct (110) is disposed so as to be opposite the cable duct (110), and in the second position of the slide (104) the cable-cutting device (102) in relation to the longitudinal extent (112) of the cable duct (110) is disposed so as to be laterally offset in relation to the cable duct (110).

2. Cable-cutting unit (100) according to Claim 1, **characterized in that** the cable-cutting device (102) has a cutter (400) which is configured for penetrating the cable duct (110) laterally in order for the cable (108) to be severed as a response to an activation from an internal region of the cable-cutting device (102).

3. Cable-cutting unit (100) according to Claim 2, **characterized by** a propelling charge which is disposed or disposable in the cable-cutting device (102) and is configured for activating the cutter (400) .

4. Cable-cutting unit (100) according to one of the preceding claims, **characterized in that** the cable duct (110) extends between a cover wall (116) and a base wall (118) of the housing (106), wherein a first recess (120) in the cover wall (116) forms a first end of the cable duct (110), and a second recess (122) in the base wall (118), opposite the first recess (120), forms a second end of the cable duct (110).

5. Cable-cutting unit (100) according to Claim 4, **characterized in that** the first recess (120) and the second recess (122) have in each case a U-shape toward a lateral edge of the cover wall (116) and toward a lateral edge of the base wall (118).

6. Cable-cutting unit (100) according to either of Claims 4 and 5, **characterized in that** the slide (104) is configured by way of a first end of the slide (104) to be mounted on the cover wall (116), and by way of a second end of the slide (104), which second end is opposite the first end, to be mounted on the base wall (118), so as to be displaceable between the first position and the second position.

7. Cable-cutting unit (100) according to one of the preceding claims, **characterized in that** the slide (104) has a U-shape which encompasses the cable duct (110), wherein the cable-cutting device (102) is disposed or disposable on an external side of a wall (124) of the slide (104) that represents a leg of the U-shape.

8. Cable-cutting unit (100) according to Claim 7, **characterized in that** the housing (106) has a rear wall (128) that connects the base wall (118) and the cover wall (116), said rear wall (128) on an internal side that is directed toward an interior of the housing (106) having at least one groove (130), extending transversely to the cable duct (110), for guiding a further wall (126) of the slide (104) that represents a further leg of the U-shape between the first position and the second position.

9. Cable-cutting unit (100) according to one of the preceding claims, **characterized by** a further cable-cutting device (132) which is disposed or disposable on the slide (104) so as to be adjacent to the cable-cutting device (102) and opposite the cable duct (110) in relation to a longitudinal extent (112) of the cable duct (110).

10. Cable-cutting unit (100) according to one of Claims 4 to 9, **characterized in that** the housing (106) has an intermediate wall (134) having a third recess (136), said intermediate wall (134) being disposed between the cover wall (116) and the base wall (118) and running parallel with the cover wall (116) and the base wall (118), wherein the slide (104) has an opening for engaging through the intermediate wall (134), said opening extending transversely to the cable duct (110), and wherein the cable-cutting device (102) is disposed or disposable on the slide (104) between the cover wall (116) and the intermediate wall (134) and the further cable-cutting device (132) is disposed or disposable on the slide (104) between the intermediate wall (134) and the base wall (118).

11. Cable-cutting system (1000) for a cable winch, wherein the cable-cutting system (1000) has the following features:
a cable-cutting unit (100) according to one of the preceding claims; and
a cable-unwinding installation (1002) which is mechanically and/or electrically coupled or coupleable to the cable-cutting unit (100) and is configured to initiate the unwinding of the cable (108) as a response to a displacement of the slide (104) of the cable-cutting unit (100) from the first position to the second position.

12. Method (1100) for operating a cable-cutting unit (100) for a cable winch, wherein the cable-cutting unit (100) has at least one cable-cutting device (102) for cutting a cable (108) running through the cable-cutting unit (100), a slide (104), and a housing (106) having a cable duct (110) for guiding the cable (108) running through the cable-cutting unit (100), wherein the cable-cutting device (102) is disposed or disposable on the slide (104) and the slide (104) is disposed or disposable on the housing (106), and wherein the method (1100) comprises the following step:
displacing (1104) the slide (104) transversely to the cable duct (110) between a first position and a second position, wherein in the first position of the slide (104) the cable-cutting device (102) in relation to a longitudinal extent (112) of the cable duct (110) is d0069sposed so as to be opposite the cable duct (110), and in the second position of the slide (104) the cable-cutting device (102) in relation to the longitudinal extent (112) of the cable duct (110) is disposed so as to be laterally offset in relation to the cable duct (110).

13. Method (1100) according to Claim 12, **characterized by** a step of providing (1102) an activation signal (1004) to the cable-cutting unit (100) in order for the cable-cutting device (102) to be activated for severing the cable (108), wherein the step of providing (1102) is carried out prior to the step of displacing (1104).

## Revendications

1. Unité de coupe de câble (100) pour un treuil, dans laquelle l'unité de coupe de câble (100) présente les caractéristiques suivantes:
au moins un dispositif de coupe de câble (102) pour raccourcir un câble (108) traversant l'unité de coupe de câble (100);
un chariot (104); et
un boîtier (6) avec un canal de câble (110) pour le guidage du câble (108) traversant l'unité de coupe de câble (100), dans laquelle le dispositif de coupe de câble (102) est ou peut être disposé sur le chariot (104) et le chariot (104) est ou peut être disposé sur le boîtier (106) de façon déplaçable transversalement au canal de câble (110) entre une première position et une deuxième position, dans laquelle dans la première position du chariot (104) le dispositif de coupe de câble (102) est disposé en face du canal de câble (110) par rapport à une extension longitudinale (112) du canal de câble (110) et dans la deuxième position du chariot (104) le dispositif de coupe de câble (102) est disposé de façon décalée latéralement par rapport au canal de câble (110) par rapport à l'extension longitudinale du canal de câble (110).

2. Unité de coupe de câble (100) selon la revendication 1, **caractérisée en ce que** le dispositif de coupe de câble (102) présente un couteau (400), qui est configuré pour pénétrer latéralement dans le canal de câble (110) à partir d'une région intérieure du dispositif de coupe de câble (102) en réponse à une activation, afin de raccourcir le câble (108).

3. Unité de coupe de câble (100) selon la revendication 2, **caractérisée par** une charge de fonctionnement, qui est ou peut être disposée dans le dispositif de coupe de câble (102), et qui est configurée pour activer le couteau (400).

4. Unité de coupe de câble (100) selon l'une quelconque des revendications précédentes, **caractérisée en ce que** le canal de câble (110) s'étend entre une paroi de couvercle (116) et une paroi de fond (118) du boîtier (106), dans laquelle un premier évidement (120) dans la paroi de couvercle (116) forme une première extrémité du canal de câble (110) et un deuxième évidement (122) dans la paroi de fond (118), situé à l'opposé du premier évidement (120), forme une deuxième extrémité du canal de câble (110).

5. Unité de coupe de câble (100) selon la revendication 4, **caractérisée en ce que** le premier évidement (120) et le deuxième évidement (122) présentent respectivement une forme en U vers un bord latéral de la paroi de couvercle (116) et vers un bord latéral de la paroi de fond (118).

6. Unité de coupe de câble (100) selon une revendication 4 ou 5, **caractérisée en ce que** le chariot (104) est configuré pour être monté avec une première extrémité du chariot (104) à la paroi de couvercle (116) et être monté avec une deuxième extrémité du chariot (104), opposée à la première extrémité, à la paroi de fond (118), de façon déplaçable entre la première position et la deuxième position.

7. Unité de coupe de câble (100) selon l'une quelconque des revendications précédentes, **caractérisée en ce que** le chariot (104) présente une forme en U entourant le canal de câble (110), dans laquelle le dispositif de coupe de câble (102) est ou peut être disposé sur un côté extérieur d'une paroi du chariot (104) représentant une branche de la forme en U.

8. Unité de coupe de câble (100) selon la revendication 7, **caractérisée en ce que** le boîtier (106) présente une paroi arrière (128) reliant la paroi de fond (118) et la paroi de couvercle (116), qui présente sur un côté intérieur orienté vers l'intérieur du boîtier (106) au moins une rainure (130) s'étendant transversalement au canal de câble (110) pour le guidage d'une autre paroi (126) du chariot (104) représentant une autre branche de la forme en U entre la première position et la deuxième position.

9. Unité de coupe de câble (100) selon l'une quelconque des revendications précédentes, **caractérisée par** un autre dispositif de coupe de câble (132), qui est ou peut être disposé sur le chariot (104) à proximité du dispositif de coupe de câble (102) en face du canal de câble (110) par rapport à une extension longitudinale (112) du canal de câble (110).

10. Unité de coupe de câble (100) selon l'une quelconque des revendications 4 à 9, **caractérisée en ce que** le boîtier (106) présente une paroi intermédiaire (134) avec un troisième évidement (136), qui est disposée entre la paroi de couvercle (116) et la paroi de fond (118) et qui s'étend parallèlement à la paroi de couvercle (116) et à la paroi de fond (118), dans laquelle le chariot (104) présente une ouverture s'étendant transversalement au canal de câble (110) pour un engagement par la paroi intermédiaire (134), et dans laquelle le dispositif de coupe de câble (102) est ou peut être disposé sur le chariot (104) entre la paroi de couvercle (116) et la paroi intermédiaire (134) et l'autre dispositif de coupe de câble (132) est ou peut être disposé sur le chariot (104) entre la paroi intermédiaire (134) et la paroi de fond (118).

11. Système de coupe de câble (1000) pour un treuil, dans lequel le système de coupe de câble (1000) présente les caractéristiques suivantes:
une unité de coupe de câble (100) selon l'une quelconque des revendications précédentes; et
un dispositif de déroulement de câble (1002), qui est ou peut être couplé mécaniquement et/ou électriquement à l'unité de coupe de câble (100) et qui est configuré pour déclencher un déroulement du câble (108) en réponse à un déplacement du chariot (104) de l'unité de coupe de câble (100) de la première position à la deuxième position.

12. Procédé (1100) pour faire fonctionner une unité de coupe de câble (100) pour un treuil, dans lequel l'unité de coupe de câble (100) présente au moins un dispositif de coupe de câble (102) pour couper un câble (108) traversant l'unité de coupe de câble (100), un chariot (104) et un boîtier (106) avec un canal de câble (110) pour le guidage du câble (108) traversant l'unité de coupe de câble (100), dans lequel le dispositif de coupe de câble (102) est ou peut être disposé sur le chariot (104) et le chariot (104) est ou peut être disposé sur le boîtier (106), et dans lequel le procédé (1100) présente l'étape suivante:
déplacer (1104) le chariot (104) transversalement au canal de câble (110) entre une première position et une deuxième position, dans lequel dans la première position du chariot (104) le dispositif de coupe de câble (102) est disposé en face du canal de câble (110) par rapport à une extension longitudinale (112) du canal de câble (110) et dans la deuxième position du chariot (104) le dispositif de coupe de câble (102) est disposé de façon décalée latéralement par rapport au canal de câble (110) par rapport à l'extension longitudinale du canal de câble (110) .

13. Procédé (1100) selon la revendication 12, **caractérisé par** une étape de fourniture (1102) d'un signal d'activation (1004) à l'unité de coupe de câble (100), afin d'activer le dispositif de coupe de câble (102) pour raccourcir le câble (108), dans lequel on exécute l'étape de fourniture (1102) avant l'étape de déplacement (1104).
